# EUROPEAN PATENT SPECIFICATION

(11) **EP 3 260 247 B1**
(45) Date of publication and mention of the grant of the patent: **23.12.2020**
(21) Application number: 16176004.6
(22) Date of filing: 23.06.2016
(51) Int. Cl.: B25J 15/06, E04F 21/22

(54) **TOOL FOR PLACING OBJECTS**
WERKZEUG ZUR PLATZIERUNG VON OBJEKTEN
OUTIL POUR PLACER DES OBJETS

(43) Date of publication of application: 27.12.2017
(73) Proprietor: El-Zouki Group AB, 126 39 Hägersten (SE)
(72) Inventor: Viksten, Leif, 931 51 Skellefteå (SE)
(74) Representative: Ström & Gulliksson AB

(56) References cited:
- EP-A1- 1 441 069
- CN-A- 102 277 955
- CN-A- 102 808 502
- CN-A- 104 060 808
- DE-U1- 20 308 251

## Description

### Technical field

The present document relates to a tool for placing objects on a surface and to a method of operating said tool.

### Background

When positioning objects for constructional purposes such as laying floors, building walls, covering walls or ceilings and so on, it is desired to obtain high accuracy in positioning the objects in order to achieve a satisfying result. Generally, tiles and the like are installed one by one by a craftsman aligning one object after the other, and manually working the objects, for instance with a rubber hammer, to adjust the height and position thereof. However, this work is tiring, heavy and time consuming. Therefore, a machine may instead be used for performing such cumbersome work.

Accurate positioning of every object when using machines for placing objects needs to be ensured since small errors may result in large drift when working on large areas. The machine must also be able to not only align the objects correctly, but also adjust the height of each object in relation to the surrounding objects to provide a smooth surface.

US 2015/0336272 A1 discloses a machine for aligning items in a pattern and a method of using the machine. The machine includes an effector for positioning the items as well as several edge and height sensors. The sensors are used for positioning a new item such as a tile in x, y and z directions relative to a first and second laid tile. The machine includes one or more suction cups connected to a vacuum source for picking up, positioning and releasing an item relative to a first laid item and a second laid item.

EP 2907938 A1 describes an apparatus and method for placing a tile on a floor. The apparatus includes a measuring device configured to measure the position of a tile to be placed on the floor relative to the ones which are already put in place. The apparatus comprises a holding head arranged on a lower portion of a positioning device for holding a tile. The holding head comprises a vacuum cup for holding the tile and is movable in six degrees of freedom.

CN 102 277 955 A discloses another paving machine comprising a tool for placing a tile on the floor. The tool is provided with four synchronized legs and four suction cups surrounding a vibrator and holding the tile.

However, placing an object depending only on the position of previously positioned objects may give rise to initially small inaccuracies which will accumulate and thus grow larger for each placed object, and further to this placing an object, such as a tile, in a bonding material requires great accuracy and just the right amount of force applied to the tile.

Therefore, there is a need for an improved tool for placing objects on a surface overcoming the above mentioned problems.

### Summary

It is an object of the present disclosure, to provide an improved tool and a method for using the tool allowing for a robotized placing of objects on a surface, which eliminates or alleviates at least some of the disadvantages of the prior art tools and devices for placing objects on a surface.

The invention is defined by the appended independent claims. Embodiments are set forth in the appended dependent claims and in the following description and drawings.

According to a first aspect there is provided a tool for placing at least one object on a surface, wherein the tool has a first portion for gripping and releasing said object and a second portion adapted to be attached to a moveable system, wherein the tool comprises at least three individually controllable tool legs, wherein each tool leg is provided with a gripping device at a lower portion thereof, a rotation device, wherein the tool legs are attached to a base portion of the rotation device, at least one vibration device, wherein said tool legs are arranged to surround said at least one vibration device, and wherein said rotation device is arranged to be able to simultaneously rotate the at least three tool legs around a center of rotation of the object the tool is arranged to hold.

The vibration device comprises a lower portion having a substantially flat surface, or a vibration plate, for abutting said upper surface of the object, and a vibrator, wherein said lower portion is connected to the base portion of the rotation device.

The construction of a tool for placing objects, such as for instance floor tiles, where the tool has tool legs with gripping devices for holding an object, surrounding a vibration device allows for a compact and robust tool, which can emulate the fine movements made by a craftsman by hand. The placement of the tool legs allow for the tool to pick up and hold an object, such as a square tile at the four corners thereof. This allows for a very exact positioning of the object. The rotational device thus allows for the object, such as a tile, to be placed with an even gap width in relation to a juxtaposed object.

Depending on the size of the object the tool may have to be equipped with more than one vibration device. The vibration device may for instance be placed in connection with each tool leg. To ensure the robustness and compactness the vibration device will, however always be placed within the tool legs.

The lower portion of the tool legs may be moveable in a direction which is perpendicular to an upper surface of said object, said gripping device may thus be moveable in four degrees of freedom.

Together with the traveler system the tool and the rotation device creates a system having six degrees of freedom. Without the traveler system the tool creates four degrees of freedom for the moving the object. This allows for placing the object, or tile, in a very exact manner.

The movable system may be any one of a traveler system and a robotic system.

By robotic system is meant for instance a jointed robotic arm.

According to one alternative the gripping device may comprise a suction device, such as a suction cup.

Each of said gripping devices may individually controllable. This means that they allows for the tool to provide four degrees of freedom when handling the object.

The flat surface acts as a vibration plate, conferring the vibration from the vibrator onto the object below. The vibrator may be any commercially available vibrator. The vibrator is connected to the vibration plate and thus impacts the object, conferring the vibration to the object through the vibration plate.

The lower portion of the vibration device may be connected to the base portion by at least three connections rods.

The vibration device may further comprise at least three biasing devices.

The biasing devices or pressure devices, are connected to the vibration plate through the connection rods, and are arranged to be able to move and hold the vibration device, i.e. the vibration plate onto the upper surface of the object. The biasing devices are further arranged to provide a pressure onto the upper surface of the object which is sufficient to provide a controlled vibration of the object by the vibrator. This vibration is sufficient to fluidize the medium, such as mortar, underlying the object, such as a tile, such that the object is fixated onto the surface.

The gripping devices are arranged to grip and hold said object on an upper surface thereof and to release said object onto a surface opposite said upper surface of the object.

The object may be any one of a ceramic tile, a vinyl tile, a plastic tile, a stone tile, bricks, roof shingles, roof panels and wall panels.

According to a second aspect there is provided a method for operating the tool according to the first aspect, wherein said method comprises the steps of, gripping an object by said gripping devices; adjusting and aligning the position of said object in relation to at least a second object placed on a surface by controlling said rotating device and/or said tool legs; placing said object juxtaposed to said at least one second object on said surface by controlling said tool legs, measuring the height of the object in relation to the juxtaposed object or objects, abutting a vibration device onto an upper surface of the object; and applying a tool pressure and vibration to said object by said vibration device until the height of the object in relation to the juxtaposed object or objects is correct and releasing said object by said gripping device, when said object is in a correct position and height in relation to said juxtaposed object or objects.

By this method it is possible to use the tool and machine where the tool is used to pick up, and position an object, such as a tile at surface, such as a floor in an automated manner. This relieves a craftsman, for instance a mason from the hard and tiring work of lifting, placing and handling sometime very heavy tiles.

This method requires that a measuring system for determining the correct position and height is used in connection with the tool and machine.

### Brief Description of the Drawings

Embodiments of the present solution will now be described, by way of example, with reference to the accompanying schematic drawings.
Fig. 1 is a schematic perspective view of a tool holding an object.
Fig. 2 is a schematic top view of a tool.
Fig. 3 is a schematic perspective view of a tool leg.
Fig. 4 is a schematic perspective view of a part of the tool.
Fig. 5 is schematic cross sectional view along the line A-A of Fig. 4.
Fig. 6 is a schematic perspective view of a tool arranged on a traveler system.

### Detailed Description

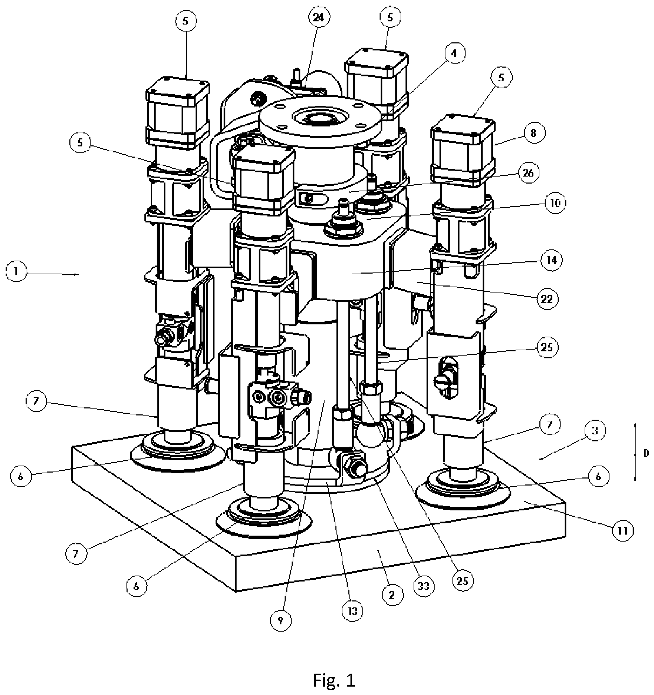

Fig. 1 illustrates a tool 1, and the tool holds or grips an object 2. The object 2 may be a tile such as a ceramic tile, vinyl tile, plastic tile, stone tile, bricks, roof shingles, roof panels, wall panels, tiles composed of different materials etc. The object may have any suitable size and shape, but it is most commonly a rectangular or square tile, having a size in the range of 100x100 mm to 800x800 mm. Rectangular shaped tiles may also vary in size and dimensions. The object may also have other geometrical shapes as triangular or round. The objects may also vary in height, and generally have a height in the range of 5 to 60 mm. The above mentioned sizes of the objects are not meant to limit the scope of tiles that the tool can carry and position. The tool can be constructed such that it can carry virtually any size and/or weight of the object. On advantage with the present tool is that it is able to handle both relatively thin and light objects as well as relatively big, thick and heavy objects.

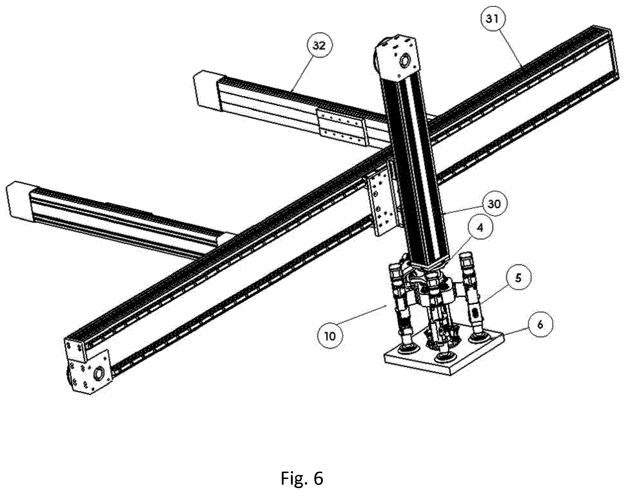

The tool 1 may be placed in a machine, not shown in the drawings, comprising a moving system, such as the illustrated traveler or a trolley system 30, 31, 32 in Fig. 6. The moving system allows for the tool to pick up an object for instance from a stack or pile of objects and move the object to a correct position on a surface, without a user having to move or handle the machine. A second or upper portion 4 of the tool 1 is arranged to be attached to a traveler or a trolley system 30, 31, 32. The machine may further comprise a measuring system, control devices and a user interface. The control devices may include a computer, hardware and software.

In connection with the tool 1 there is a measuring system comprising a number of sensors and control devices, not shown in the drawings or described further below, arranged to determine the position of both the tool 1 and the object 2 for positioning, aligning and placing the object at the correct position. The construction and shape of the tool allow for the measuring system to have the best possible view of the tool, tool part and object. The sensors may include optical sensors, such as laser, photovoltaic cells, or an optical camera and video camera, both analogue and digital.

The tool has a lower portion 3, comprising gripping devices 6 for holding and releasing the object 2. The gripping device 6 may be for a suction device such as suction cup, and each of the gripping devices 6 may be individually controllable and adjusted.

The gripping devices are arranged on tool legs 5. The tool 1 comprises at least three tool legs 5. A tool 1 having three tool legs may be used for instance when gripping a triangle shaped object.

The tool legs 5 are attached to a rotation or rotating device 10. The rotating device 10 is arranged be able to rotate around a center of rotation of the object is holding. The rotation device 10 is placed symmetrically and centrally in relation to the tool legs 5.

The at least three tool legs 5 are arranged to surround a vibration device 9, i.e. the vibration device is arranged within the circumference all of the tool legs present in the tool at all times.

The tool legs are further arranged and positioned such that an optimal grip of the object is achieved. By optimal grip of the object is meant that the gripping devices 6 are placed as close as possible to the corners of the object, while allowing for the measuring system to be able to determine where the edges of the object are located.

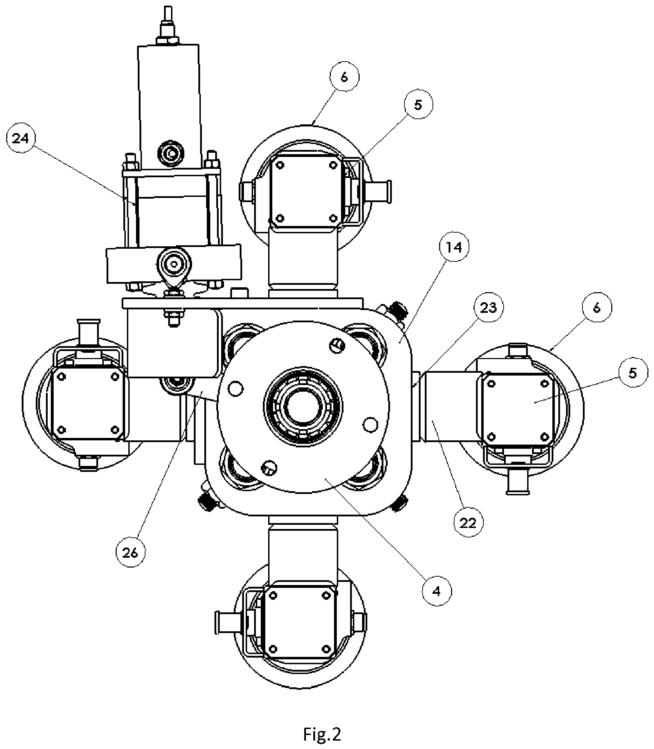

In Fig. 2 a tool 1 is shown having four tool legs, where the distance between the tool legs 5 is designed such that the distances between the legs is equal, i.e. as seen in a top view of the tool 1 in Fig. 2 the four legs may be arranged at an angle of 90° to each other, in relation to a central axis of said vibration device. This position of the tool legs 5 is advantageous for a square object or tile. The tool 1 may alternatively comprise even more than four tool legs.

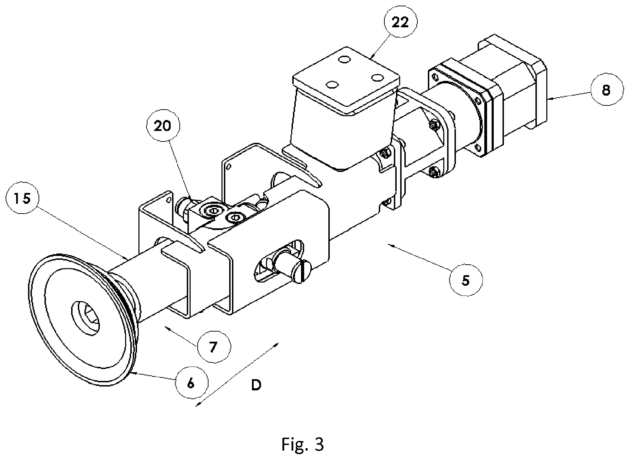

As illustrated by Fig. 3 the tool legs 5 have a gripping device 6 arranged at a lower portion 7 thereof. By lower portion 7 of the leg is meant the portion of the tool leg that is to be or is in proximity to the object 2 to be carried. The tool leg 5 may be attached to a base portion 14 of the rotation device 10 by a connection 22. The tool leg may thus be attached to the rotating device 10, such that it can be removed for repairs etc. if needed.

The tool leg 5 is provided with means for adjusting the vertical position of the lower portion 7 and gripping device 6, i.e. to enable adjustment of the height of the gripping devices when placing a tile on a floor surface. Since the gripping devices 6 are individually controllable for height, the object can be moveable in four degrees of freedom. By vertical position is meant that the gripping device 6 is moveable or adjustable in a direction D which is perpendicular to an upper surface 11 of the object 2. The means for adjusting the vertical position may be a pneumatic or hydraulic piston, or an electric motor, or any other means suitable for controlling the vertical position. The upper portion 8 of the tool leg 5 may house the control means. This means that it is only the lower part 7, and a vacuum pipe or mounting pipe 15, of the tool leg which is moveable for instance through an inner sliding tube. The gripping devices may be a suction cup. The suction cup may be formed from a material which is flexible enough to maintain the suction, i.e. the grip, of the upper surface of the object while the object is subjected to a vibration by the vibration device.

Each tool leg 5 is further provided with a vacuum source 20 connected to a pressurized air source (not shown in the drawings). The lower portion 7 of the leg may thus be constructed such that a suction cup arranged thereon is in connection with a vacuum source. The gripping devices 6 are fixedly connected to the lower portion 7 of the tool leg.

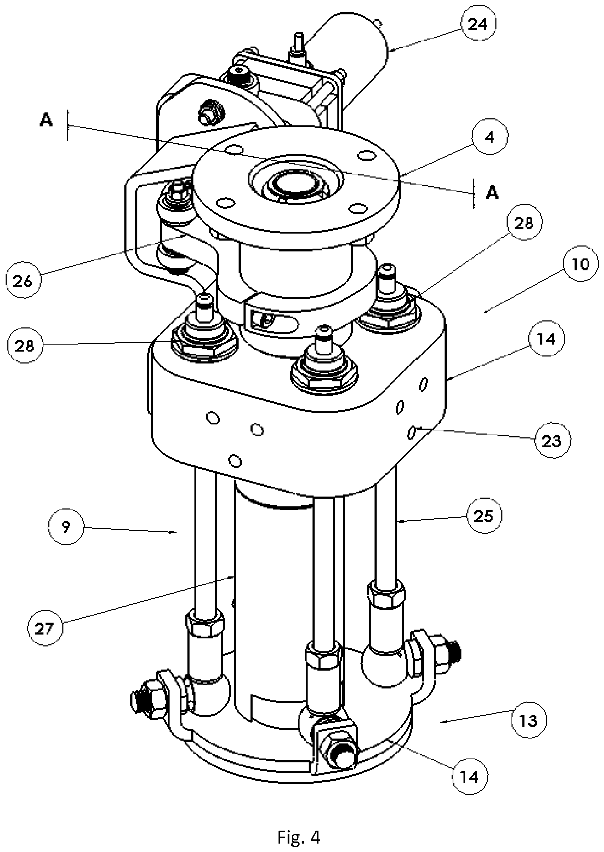

As illustrated in Fig. 4 the rotation device 10 has a base portion 14. The connection 22 of tool legs 5 (not shown in this drawing) may be attached to the mating connection 23.

The tool 1 is further provided with a vibration device 9. The vibration device is provided in order to set or fixate the object 2 properly on the surface where it is to be placed. The vibration device 9 is arranged to generate the vibration and transfer the vibration to the object 2, thus emulating the movement made by a craftsman when he knocks on a tile in order for the tile to set or fasten in the underlying medium such as mortar. This means that the vibration, or frequency of the vibration, and the downwardly directed force used by the vibration device will depend on the underlying material, and the desired height of the object in relation to a second object placed adjacent or juxtaposed to the object 2. The vibration movement may be a linear stroke or rotational stroke, depending on the equipment and configuration used. The vibration device is thus as such provided to fluidize the underlying medium or mortar, such that the object is properly fixated onto the surface. The tool 1 is supervised by sensors for determining and measuring the correct position and height of the object in relation to at least one other juxtaposed object placed on the surface, and thus to a control system for controlling the vibration device 9 through the operating device.

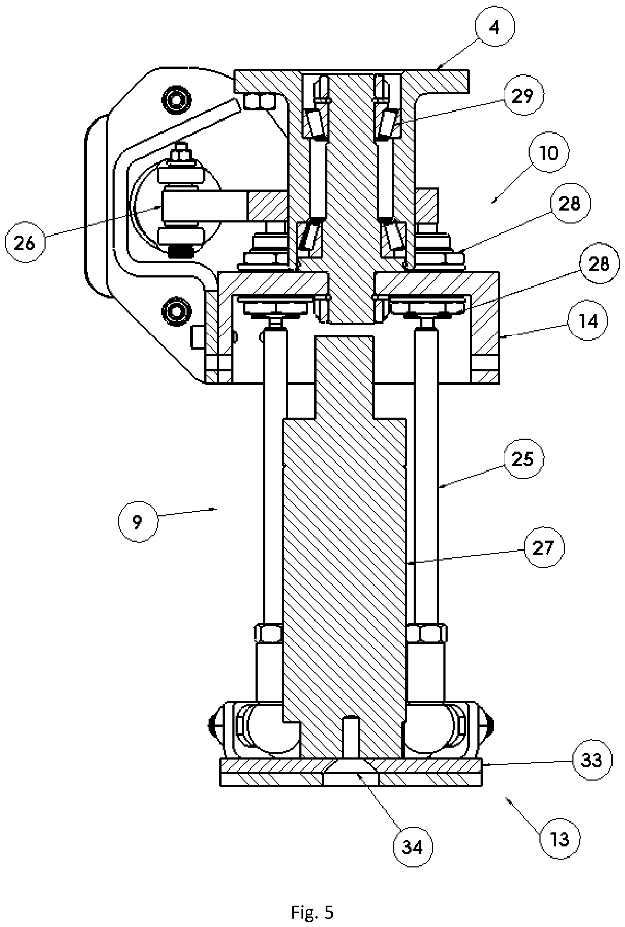

The construction and configuration of the vibration device may vary. In Fig. 4 one configuration is illustrated, where the vibration device 9 comprises a lower portion 13, which comprises a flat surface, or a so called vibration plate 33. The vibration plate 33 is connected to the base portion 33 by at least three connection rods 25, which are suspended in the base portion 33. The lower portion 13 of the vibration device 9 may be constructed in various manners, depending on the object to which it is arranged to abut. As shown in Fig. 4 the lower portion 13 may comprises a flat surface 33 adapted for abutting an upper surface 11 of the object 2.The lower portion of the vibration plate may further be provided with a rubber plate etc.. The vibration device 9 further comprises a vibrator 27. The vibrator may be any commercially available vibrator for providing the vibration movement. The vibrator may be fixedly connected to the vibration plate, as shown in Fig. 5 by a screw joint 33.
The vibration device further comprises at least three biasing devices 28 or pressure devices which are connected to the connection rods 25. The biasing devices 28 thus provides for a way of gripping, holding and placing the object in the correct position without the vibration plate 33 being in connection with the object. Once the object has been placed in a correct position in relation to a juxtaposed object, the biasing devices provides for the vibration plate being able to abut an upper surface of the object. The biasing devices 28 may then provide a tool pressure onto, i.e. press the vibration plate onto the upper surface of the object, which tool pressure is adapted to be sufficient for providing a controlled vibration. This means that the pressure with which the vibration plate 33 is pushed onto the object 2 may be adapted depending on for instance the stiffness of the underlying medium. In Fig. 5 the biasing device 28 is shown as a pneumatic cylinder suspended in the base portion 14. The biasing devices may however be for instance a spring, such as a hydraulic or pneumatic spring or a coil spring. The biasing devices 28 may further be electromechanically controlled devices.

Since the biasing device 28 is connected to the base portion 14 of the rotation device the vibration device 9 may also be made to rotate around the center of rotation of the object 2.

The vibration device 9 is connected to an operating device, not shown in the drawings, for providing the correct tool pressure and vibration movement onto an object 2.

As illustrated in Fig. 5 and in Fig. 4 an engine or motor 24 is arranged to operate the rotation device 10. The engine or motor 24 may be a step motor having a through shaft, but it may alternatively be any type of suitable motor. Alternatively the rotation device 10 may be operated by any other suitable drive means. The engine or motor 24 may be connected to an arm 26 that provides the rotational movement of the base portion 14, thus rotating the tool arms 5 and the vibration device 9. A ball bearing 29 may be provided inside the rotation device 10 to facilitate the rotational movement. Since the upper part 4 of the tool 1 is connected to a moveable system such as for instance a part 30 of traveler or trolley system 30, 31, 32 as illustrated by Fig. 6 the arm 26 connected to the engine 24 can provide for the rotational movement of the rotation device. This rotational movement may be provided in other ways as well.

In Fig. 6 one example of a moveably system is shown as a traveler system 30, 31, 32. This system allows for the movement of the tool 1 in several different directions, to grip, lift, align and place an object 2 on a surface, thus providing the gripping devices with a full six degrees of freedom when handling the object 2.

## Claims

1. A tool (1) for placing at least one object (2) on a surface, wherein the tool (1) has a first portion (3) for gripping and releasing said object and a second portion (4) adapted to be attached to a moveable system, wherein the tool comprises at least three individually controllable tool legs (5), wherein each tool leg is provided with a gripping device (6) at a lower portion (7) thereof;
a rotation device (10), wherein the tool legs (5) are attached to a base portion (14) of the rotation device (10);
**characterized in that** at least one vibration device (9), wherein said tool legs (5) are arranged to surround said at least one vibration device (9), wherein said vibration device (9) comprises a lower portion (13) having a substantially flat surface (33) for abutting said upper surface (11) of the object, and a vibrator (27), wherein said lower portion is connected to the base portion (14) of the rotation device (10); and
**in that** said rotation device (10) is arranged to be able to simultaneously rotate the at least three tool legs (5) around a center of rotation of the object (2) the tool is arranged to hold.

2. The tool (1) as claimed in any one of the preceding claims, wherein the lower portion (7) of the tool legs (5) is moveable in a direction (D) which is perpendicular to an upper surface (11) of said object (2).

3. The tool (1) as claimed in claim 1 or claim 2, wherein said gripping device (6) is moveable in four degrees of freedom.

4. The tool (1) as claimed in any one of the preceding claims, wherein the movable system is any one of a traveler system (30, 31, 32) and a robotic system.

5. The tool (1) as claimed in any one of the preceding claims, wherein said gripping device (6) comprises a suction device, such as a suction cup.

6. The tool as claimed in claim 5, wherein each of said gripping devices (6) are individually controllable.

7. The tool (1) as claimed in claim 1, wherein said lower portion (13) is connected to the base portion (14) by at least three connections rods (25).

8. The tool (1) as claimed in any one of claims 1 or 7, wherein the vibration device (9) further comprises at least three biasing devices (28).

9. The tool as claimed in any one of the preceding claims, wherein said gripping devices (6) are arranged to grip and hold said object (2) on an upper surface (11) thereof and to release said object onto a surface opposite said upper surface (11) of the object.

10. The tool as claimed in any one of the preceding claims, wherein the object (2) is any one of a ceramic tile, a vinyl tile, a plastic tile, a stone tile, bricks, roof shingles, roof panels and wall panels.

11. A method for operating the tool as claimed in any one of claims 1-7, wherein said method comprises the steps of:
i. gripping an object (2) by said gripping devices (6);
ii. adjusting and aligning the position of said object (2) in relation to at least a second object placed on a surface by controlling and adjusting said rotating device (10) and/or said tool legs (5);
iii. placing said object (2) juxtaposed to said at least one second object on said surface by controlling said tool legs (5),
iv. measuring the height of the object (2) in relation to the juxtaposed object or objects;
v. abutting a vibration device (9) onto an upper surface (11) of the object; and
vi. applying a tool pressure and vibration to said object (2) by said vibration device (9) until the height of the object (2) in relation to the juxtaposed object or objects is correct; and releasing said object (2) by said gripping device, when said object is in a correct position and height in relation to said juxtaposed object orobjects.

12. The method according to claim 11, wherein the vibration device (9) emulates the movement made by a craftsman knocking on the object (2) in order for the object (2) set or fasten in an underlying medium.

## Patentansprüche

1. Werkzeug (1) zum Platzieren mindestens eines Objekts (2) auf einer Oberfläche, wobei das Werkzeug (1) einen ersten Abschnitt (3) zum Greifen und Freigeben des Objekts und einen zweiten Abschnitt (4), der zur Befestigung an einem bewegbaren System eingerichtet ist, aufweist, wobei das Werkzeug mindestens drei individuell steuerbare Werkzeugbeine (5) umfasst, wobei jedes Werkzeugbein an einem unteren Abschnitt (7) davon mit einer Greifvorrichtung (6) versehen ist;
eine Drehvorrichtung (10), wobei die Werkzeugbeine (5) an einem Basisabschnitt (14) der Drehvorrichtung (10) angebracht sind; **dadurch gekennzeichnet, dass** es mindestens eine Vibrationsvorrichtung (9) gibt, wobei die Werkzeugbeine (5) so angeordnet sind, dass sie die mindestens eine Vibrationsvorrichtung (9) umgeben, wobei die Vibrationsvorrichtung (9) einen unteren Abschnitt (13) mit einer im Wesentlichen flachen Oberfläche (33) zum Anlegen an die obere Oberfläche (11) des Objekts aufweist, und einen Vibrator (27) umfasst, wobei der untere Abschnitt mit dem Basisabschnitt (14) der Drehvorrichtung (10) verbunden ist; und dass die Drehvorrichtung (10) so angeordnet ist, dass sie in der Lage ist, die mindestens drei Werkzeugbeine (5) gleichzeitig um ein Drehzentrum des Objekts (2) zu drehen, das das Werkzeug halten soll.

2. Werkzeug (1) nach einem der vorangehenden Ansprüche, wobei der untere Abschnitt (7) der Werkzeugbeine (5) in einer Richtung (D) beweglich ist, die senkrecht zu einer oberen Fläche (11) des Objekts (2) verläuft.

3. Werkzeug (1) nach Anspruch 1 oder Anspruch 2, wobei die Greifvorrichtung (6) in vier Freiheitsgraden beweglich ist.

4. Werkzeug (1) nach einem der vorangehenden Ansprüche, wobei es sich bei dem beweglichen System um ein Traveller-System (30, 31, 32) und ein Roboter-System handelt.

5. Werkzeug (1), nach einem der vorangehenden Ansprüche, wobei die Greifvorrichtung (6) eine Saugvorrichtung, wie z.B. einen Saugnapf, umfasst.

6. Werkzeug nach Anspruch 5, wobei jede der Greifvorrichtungen (6) individuell steuerbar ist.

7. Werkzeug (1) nach Anspruch 1, wobei der untere Abschnitt (13) durch mindestens drei Verbindungsstangen (25) mit dem Basisabschnitt (14) verbunden ist.

8. Werkzeug (1) nach einem der Ansprüche 1 oder 7, wobei die Vibrationsvorrichtung (9) des Weiteren mindestens drei Vorspannvorrichtungen (28) umfasst.

9. Werkzeug nach einem der vorangehenden Ansprüche, wobei die Greifvorrichtungen (6) so angeordnet sind, dass sie das Objekt (2) an einer oberen Fläche (11) desselben greifen und halten und das Objekt auf eine der oberen Fläche (11) des Objekts gegenüberliegende Fläche freigeben.

10. Werkzeug, wie es in einem der vorangehenden Ansprüche beansprucht wird, wobei das Objekt (2) eines aus folgenden ist: eine Keramikfliese, eine Vinylfliese, eine Kunststofffliese, eine Steinfliese, Ziegelsteine, Dachschindeln, Dachpaneele und Wandpaneele.

11. Verfahren zum Betrieb des Werkzeugs nach einem der Ansprüche 1-7, wobei das Verfahren die folgenden Schritte umfasst:
i. Greifen eines Objekts (2) durch die Greifvorrichtungen (6) ;
ii. Einstellen und Ausrichten der Position des Objekts (2) in Bezug auf mindestens ein zweites Objekt, das auf einer Oberfläche angeordnet ist, durch Steuern und Einstellen der Drehvorrichtung (10) und/oder der Werkzeugbeine (5);
iii. Anordnen des Objekts (2) neben dem mindestens einen zweiten Objekt auf der Oberfläche durch Steuern der Werkzeugbeine (5);
iv. Messen der Höhe des Objekts (2) in Bezug auf das oder die nebeneinander liegenden Objekte;
v. Anlegen einer Vibrationsvorrichtung (9) an eine obere Fläche (11) des Objekts; und
vi. Ausüben eines Werkzeugdrucks und einer Vibration auf das Objekt (2) durch die Vibrationsvorrichtung (9), bis die Höhe des Objekts (2) in Bezug auf das oder die nebeneinander liegenden Objekte korrekt ist; und Freigeben des Objekts (2) durch die Greifvorrichtung, wenn sich das Objekt in einer korrekten Position und Höhe in Bezug auf das oder die nebeneinander liegenden Objekte befindet.

12. Verfahren nach Anspruch 11, wobei die Vibrationsvorrichtung (9) die Bewegung nachahmt, die ein Handwerker macht, der auf das Objekt (2) klopft, damit das Objekt (2) in ein darunter liegendes Medium gesetzt oder in einem darunter liegenden Medium befestigt wird.

## Revendications

1. Outil (1) pour placer au moins un objet (2) sur une surface, dans lequel l'outil (1) comporte une première partie (3) pour saisir et libérer ledit objet et une seconde partie (4) adaptée pour être attachée à un système mobile, dans lequel l'outil comprend au moins trois pieds d'outil (5) pouvant être commandés individuellement, dans lequel chaque pied d'outil est pourvu d'un dispositif de préhension (6) au niveau d'une partie inférieure (7) de celui-ci ;
un dispositif de rotation (10), dans lequel les pieds d'outil (5) sont attachés à une partie de base (14) du dispositif de rotation (10) ;
**caractérisé par** au moins un dispositif de vibration (9), dans lequel lesdits pieds d'outil (5) sont agencés pour entourer ledit au moins un dispositif de vibration (9), dans lequel ledit dispositif de vibration (9) comprend une partie inférieure (13) ayant une surface sensiblement plate (33) pour appuyer sur ladite surface supérieure (11) de l'objet, et un vibrateur (27), dans lequel ladite partie inférieure est reliée à la partie de base (14) du dispositif de rotation (10) ; et
en ce que ledit dispositif de rotation (10) est agencé pour pouvoir faire tourner simultanément les au moins trois pieds d'outil (5) autour d'un centre de rotation de l'objet (2) que l'outil est agencé pour tenir.

2. Outil (1) selon l'une quelconque des revendications précédentes, dans lequel la partie inférieure (7) des pieds d'outil (5) est mobile dans une direction (D) qui est perpendiculaire à une surface supérieure (11) dudit objet (2).

3. Outil (1) selon la revendication 1 ou la revendication 2, dans lequel ledit dispositif de préhension (6) est mobile dans quatre degrés de liberté.

4. Outil (1) selon l'une quelconque des revendications précédentes, dans lequel le système mobile est l'un quelconque parmi un système de déplacement (30, 31, 32) et un système robotique.

5. Outil (1) selon l'une quelconque des revendications précédentes, dans lequel ledit dispositif de préhension (6) comprend un dispositif d'aspiration, tel qu'une ventouse.

6. Outil selon la revendication 5, dans lequel chacun desdits dispositifs de préhension (6) peut être individuellement commandé.

7. Outil (1) selon la revendication 1, dans lequel ladite partie inférieure (13) est reliée à la partie de base (14) par au moins trois bielles (25).

8. Outil (1) selon l'une quelconque des revendications 1 ou 7, dans lequel le dispositif de vibration (9) comprend en outre au moins trois dispositifs de sollicitation (28).

9. Outil selon l'une quelconque des revendications précédentes, dans lequel lesdits dispositifs de préhension (6) sont agencés pour saisir et maintenir ledit objet (2) sur une surface supérieure (11) de celui-ci et pour libérer ledit objet sur une surface opposée à ladite surface supérieure (11) de l'objet.

10. Outil selon l'une quelconque des revendications précédentes, dans lequel l'objet (2) est l'un quelconque parmi un carreau de céramique, un carreau de vinyle, un carreau de plastique, un carreau de pierre, des briques, des bardeaux de toit, des panneaux de toit et des panneaux de mur.

11. Procédé pour faire fonctionner l'outil selon l'une quelconque des revendications 1 à 7, dans lequel ledit procédé comprend les étapes de :
i. saisie d'un objet (2) par lesdits dispositifs de préhension (6) ;
ii. ajustement et alignement de la position dudit objet (2) par rapport à au moins un second objet placé sur une surface en commandant et en ajustant ledit dispositif rotatif (10) et/ou lesdits pieds d'outil (5) ;
iii. placement dudit objet (2) juxtaposé audit au moins un second objet sur ladite surface en commandant lesdits pieds d'outil (5) ;
iv. mesure de la hauteur de l'objet (2) par rapport à l'objet ou aux objets juxtaposés ;
v. appui d'un dispositif de vibration (9) sur une surface supérieure (11) de l'objet ; et
vi. application d'une pression et d'une vibration d'outil sur ledit objet (2) par ledit dispositif de vibration (9) jusqu'à ce que la hauteur de l'objet (2) par rapport à l'objet ou aux objets juxtaposés soit correcte ; et libération dudit objet (2) par ledit dispositif de préhension, lorsque ledit objet est dans une position et une hauteur correctes par rapport audit objet ou auxdits objets juxtaposés.

12. Procédé selon la revendication 11, dans lequel le dispositif de vibration (9) imite le déplacement créé par un artisan frappant sur l'objet (2) afin que l'objet (2) se pose ou se fixe dans un support sous-jacent.
